(19) Europäisches Patentamt
European Patent Office
Office européen des brevets

(11) **EP 2 681 429 B1**

(12) **FASCICULE DE BREVET EUROPEEN**

(45) Date de publication et mention
de la délivrance du brevet:
**19.05.2021 Bulletin 2021/20**

(21) Numéro de dépôt: **12711950.1**

(22) Date de dépôt: **28.02.2012**

(51) Int Cl.:
*F02C 9/28* *(2006.01)*   *F04D 27/00* *(2006.01)*
*F04D 27/02* *(2006.01)*

(86) Numéro de dépôt international:
**PCT/FR2012/050412**

(87) Numéro de publication internationale:
**WO 2012/120220 (13.09.2012 Gazette 2012/37)**

(54) **PROCÉDÉ DE SUPPRESSION DU DÉCOLLEMENT TOURNANT DANS UNE TURBOMACHINE**

VERFAHREN ZUM UNTERDRÜCKEN VON UMLAUFENDER STRÖMUNGSABLÖSUNG IN EINER TURBOMASCHINE

METHOD FOR SUPPRESSING ROTATING STALL IN A TURBOMACHINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.03.2011 FR 1151778**

(43) Date de publication de la demande:
**08.01.2014 Bulletin 2014/02**

(73) Titulaire: **Safran Aircraft Engines
75015 Paris (FR)**

(72) Inventeur: **DJELASSI, Cédrik
F-91630 Marolles en Hurepoix (FR)**

(74) Mandataire: **Camus, Olivier Jean-Claude
Cabinet Camus Lebkiri
25, rue de Maubeuge
75009 Paris (FR)**

(56) Documents cités:
**EP-A2- 0 418 189    GB-A- 2 122 398
US-A- 3 867 717    US-A- 3 868 625
US-A- 4 118 926    US-A- 5 782 603
US-B2- 6 871 487**

• **GUOXIANG GU ET AL: "An Overview of Rotating
Stall and Surge Control for Axial Flow
Compressors", IEEE TRANSACTIONS ON
CONTROL SYSTEMS TECHNOLOGY, IEEE
SERVICE CENTER, NEW YORK, NY, US, vol. 7,
no. 6, 1 novembre 1999 (1999-11-01),
XP011013997, ISSN: 1063-6536**

## Description

## DOMAINE TECHNIQUE

La présente invention se rapporte au domaine général des turbomachines. Elle concerne plus particulièrement un procédé permettant de supprimer le décollement tournant affectant un compresseur de turbomachine.

L'invention s'applique à tout type de turbomachines, et notamment aux turbomachines aéronautiques telles que les turboréacteurs, les turbopropulseurs...

## ETAT DE LA TECHNIQUE ANTERIEUR

Le pompage est un phénomène aérodynamique violent qui intervient dans les compresseurs. Il s'agit d'une instabilité aérodynamique qui donne naissance à d'importantes ondes longitudinales, qui peuvent aller jusqu'à une inversion du sens d'écoulement dans le compresseur. C'est un phénomène qui peut être destructeur pour les aubes des compresseurs. Le pompage se caractérise par un décrochage franc d'une grande partie des aubes du compresseur.

Le décollement tournant est également une instabilité aérodynamique affectant le compresseur et qui se caractérise par la présence d'une ou plusieurs poches de fluide localisées (également appelées cellules ou poches de décollement), se propageant dans la direction circonférentielle du compresseur, à une vitesse généralement inférieure à la vitesse de rotation du compresseur. Le décollement tournant correspond donc à un décrochage partiel du compresseur, qui se caractérise par une perte de performance partielle mais qui peut être stable, se traduisant par des stagnations ou des dévissages de régime moteur, plus ou moins marquées, ainsi que des augmentations de températures de sorties turbine importantes.

Le décollement tournant apparaît généralement dans deux situations :

- pendant les phases de démarrages ou de rallumages des turbomachines ou
- lors d'une phase de régulation de la poussée après démarrage. Dans ce cas, le décollement tournant apparait généralement après une phase de pompage dans le compresseur.

Le décollement tournant est un phénomène stable : en effet une fois qu'un décollement tournant apparait dans un compresseur, il s'installe même si les conditions d'apparition du décollement tournant ont disparu. Ainsi le décollement tournant ne disparait généralement pas de lui-même. Le phénomène est persistant et si rien n'est tenté pour le supprimer les risques de destruction de la turbine par surchauffe sont inévitables. Généralement c'est l'alarme de surchauffe qui conduit le pilote à s'apercevoir de la présence du décollement tournant. Par ailleurs en cas de charge de travail importante de l'équipage le constat tardif de l'alarme a conduit à de nombreuses destructions de turbines.

Une détection de décollement tournant permet d'avertir le système de l'apparition du phénomène. Le document FR n°1055559 décrit un procédé de détection du décollement tournant dans une turbomachine.

Actuellement, on supprime un décollement tournant dans une turbomachine, une fois que ce décollement tournant a été détecté, en éteignant puis rallumant la turbomachine, ceci manuellement ou de manière automatique. Le fait d'éteindre puis de rallumer la turbomachine permet de faire disparaître dans la majorité des cas le décollement tournant, de sorte que lorsque l'on rallume la turbomachine le décollement tournant a disparu

Le document US 3 868 625 décrit un procédé pour anticiper ou détecter rapidement le début d'un pompage dans une turbomachine et pour prendre une action corrective à temps pour éviter la condition de pompage, permettant une auto-récupération de la turbomachine sans qu'une extinction soit nécessaire. Le document US 4 118 926 décrit un système de rallumage automatique d'une turbomachine suite à son éteignement résultant de la détection d'un pompage ou d'un pompage imminent.

Cependant, des essais montrent un taux d'échec de redémarrage moteur important.

## EXPOSE DE L'INVENTION

L'invention vise à remédier aux inconvénients de l'état de la technique en proposant un procédé permettant de supprimer efficacement le décollement tournant qui apparaît dans un compresseur d'une turbomachine, tout en optimisant le rallumage de la turbomachine lorsque celle-ci a été éteinte suite à la détection d'un décollement tournant.

Un autre objet de l'invention est de proposer un procédé de suppression du décollement tournant qui puisse être mis en oeuvre par les organes de commande déjà présents dans une turbomachine.

Pour ce faire, est proposé, selon l'invention, un procédé de suppression d'un décollement tournant dans un compresseur d'une turbomachine avec les caractéristiques de la revendication 1.

Ainsi, le décollement tournant n'est pas traité de la même manière lorsqu'il est apparu suite à du pompage ou non. Le fait de détecter s'il y a eu du pompage dans la turbomachine permet donc d'adapter le procédé de suppression du décollement tournant au type de décollement tournant de façon à traiter de façon plus efficace le décollement tournant. En effet, agir sans distinction sur le type de décollement tournant compromet le rallumage de la turbomachine : des essais montrent ainsi un échec quasi-systématique du rallumage lorsque le décollement tournant est subvenu suite à un pompage, et qu'aucune étape de restitution de marge n'a été pratiquée.

Ainsi, lorsqu'aucun pompage n'a été détecté, le procédé comporte juste les étapes d'extinction et de rallumage de la turbomachine.

Au contraire, lorsque du pompage a été détecté, le procédé comporte une étape de restitution de marge au pompage. Le fait de restituer de la marge au pompage au compresseur, et plus précisément d'augmenter la marge au pompage du compresseur, permet d'éviter que les conditions qui ont conduit à l'apparition d'un décollement tournant, c'est-à-dire le pompage, ne réapparaissent.

Le procédé selon l'invention peut également présenter une ou plusieurs des caractéristiques ci-après, prises isolément ou selon toutes les combinaisons techniquement possibles.

Avantageusement, l'étape d'extinction a une durée comprise entre 0.5 secondes et 2 secondes, et de préférence entre 1 seconde et 1.5 secondes. Ensuite l'étape de rallumage a lieu. Ainsi, le procédé comporte une étape de microcoupure de la turbomachine. Le fait d'éteindre la turbomachine pendant une durée de l'ordre de la seconde permet de supprimer le décollement tournant dans la majorité des cas. En outre, l'extinction de la machine peut ainsi être mise en oeuvre par les organes déjà présents dans la turbomachine. En effet, les robinets carburant présents dans la turbomachine sont capables de réaliser une microcoupure d'une durée comprise entre 0.5 et 2 secondes. Par contre ils ne pourraient pas réaliser des microcoupures d'une durée très inférieure à 0.5 secondes de sorte que si l'on voulait effectuer des microcoupures de l'ordre de la milliseconde, la turbomachine devrait être équipée de vannes spécifiques. Par ailleurs, une microcoupure plus longue n'est pas nécessaire pour permettre de supprimer le décollement tournant.

Avantageusement, la turbomachine comporte une chambre de combustion, la chambre de combustion étant alimentée en carburant, l'étape d'extinction de la turbomachine comportant une étape de coupure de l'alimentation de la chambre de combustion en carburant. En effet, un des moyens les plus simples d'arrêter la turbomachine est de couper l'alimentation de la chambre de combustion en carburant. La turbomachine s'arrête alors et le décollement tournant disparaît. Avantageusement, un robinet carburant permet d'alimenter la chambre de combustion en carburant, l'étape de coupure de l'alimentation de la chambre de combustion étant une étape de fermeture du robinet carburant.

Selon l'invention, le procédé comporte une étape de détection de décollement tournant. Cette étape de détection de décollement tournant est préalable à toute autre étape, et les étapes d'extinction et de rallumage de la turbomachine ne sont mises en œuvre que si un décollement tournant a été détecté.

Pour détecter un décollement tournant, le procédé décrit dans le document FR n°1055559 est de préférence mis en œuvre.

Pour restituer de la marge au pompage au compresseur, en cas de pompage lors d'un démarrage moteur, le niveau du coefficient « CsurP » atteint lors du pompage ne devra pas être atteint de nouveau lors de la poursuite du démarrage qui fait suite à la phase de suppression du décollement tournant puis du rallumage moteur, afin d'éviter un nouveau pompage. Le niveau de « CsurP » est représentatif de la marge au pompage des compresseurs hautes pressions.

Le coefficient « CsurP » est défini par la formule suivante :

$$CsurP = \frac{WF32}{Ps32 \cdot (T25/288.15)^{\theta}}$$

Avec :

- WF32 qui est le débit carburant injecté dans la chambre de combustion ;
- Ps32 qui est la pression dans la chambre de combustion ;
- T25 qui est la température en entrée du compresseur ;
- Et θ qui est égal à 0.5.

Le coefficient « CsurP » est généralement fonction du régime réduit « Xn25r » du compresseur. En effet, le régime réduit « Xn25r » est défini par la formule suivante :

$$Xn25r = \frac{Xn25}{(T25/288.15)^{\theta}}$$

Avec Xn25 qui est le régime de rotation du corps haute pression.

Lorsque le décollement tournant a été généré suite à un pompage, il est nécessaire d'abaisser le niveau du coefficient « CsurP » à un régime réduit « Xn25r » donné, de manière à éviter un nouveau pompage. Ainsi, selon un mode de réalisation, l'étape de restitution d'une marge au pompage comporte une étape de mémorisation du niveau de « CsurP » à un régime réduit donné « Xn25r » lorsque le pompage est apparu, afin de diminuer le niveau de « CsurP » à un régime réduit « Xn25r » plus faible après l'étape de rallumage de la turbomachine.

Pour diminuer « CsurP », on utilise une loi de « CsurP » fonction du régime réduit « Xn25r ». On applique un coefficient réducteur sur cette loi autour du niveau de « Xn25r » mémorisé lors du pompage.

La diminution de « CsurP » se traduit alors par une baisse de débit de carburant injecté dans la chambre de combustion, optimisée autour du point de régime réduit critique vis-à-vis du pompage. Ceci permet d'éviter que le pompage ne réapparaisse et ainsi que le décollement tournant ne réapparaisse. L'étape de contrôle du débit carburant peut être réalisée en contrôlant une vanne carburant permettant de contrôler la quantité de carburant injectée dans la chambre de combustion.

Avantageusement, la diminution de « CsurP » est réalisée par diminutions successives de l'ordre de 3 à 5%. Selon un mode de réalisation on mémorise donc les pompages et les décollements successifs afin de diminuer de manière itérative le niveau de « CsurP » à un régime réduit « Xn25r » donné.

Ainsi, pour restituer de la marge au pompage au compresseur, on peut notamment diminuer le débit de carburant injecté dans la chambre de combustion. Mais plus généralement, la marge au pompage peut être restituée grâce au contrôle de nombreux paramètres.

Selon un autre mode de réalisation, qui peut être combiné avec le précédent, le compresseur comporte au moins un stator présentant un angle de calage variable, l'étape de restitution de la marge au pompage du compresseur comportant une étape de modification de l'angle de calage du stator. En effet, le fait de modifier l'angle de calage du stator du compresseur permet de limiter la charge appliquée sur les aubes du compresseur, ce qui permet d'éviter la réapparition du pompage dans le compresseur, et donc du décollement tournant.

Selon un autre mode de réalisation, qui peut être combiné avec les précédents, le compresseur est pourvu d'une vanne de décharge permettant de contrôler la quantité d'air dans le compresseur, l'étape de restitution de la marge au pompage comportant une étape d'ouverture de la vanne de décharge. En effet, le fait de diminuer la quantité d'air dans le compresseur permet également de limiter la charge qui s'exerce sur les aubes du compresseur, et donc de diminuer le risque d'apparition de pompage dans le compresseur.

L'étape de restitution de la marge au pompage du compresseur peut avoir lieu entre les étapes d'extinction et de rallumage de la turbomachine ou alors après l'étape de rallumage de la turbomachine.

## BREVES DESCRIPTION DES FIGURES

D'autres caractéristiques et avantages de l'invention ressortiront à la lecture de la description détaillée qui suit, en référence aux figures annexées, qui illustrent :

- La figure 1, un diagramme représentant schématiquement les étapes d'un procédé selon l'invention ;
- La figure 2, une courbe représentant la vitesse de rotation du corps haute pression en fonction du temps lors d'un allumage normal;
- La figure 3, une courbe représentant la vitesse de rotation du corps haute pression en fonction du temps lors d'un allumage avec décollement tournant lorsqu'un procédé selon l'invention est mis en œuvre.

Pour plus de clarté, les éléments identiques ou similaires sont repérés par des signes de références identiques sur l'ensemble des figures.

## DESCRIPTION DETAILLEE D'AU MOINS UN MODE DE REALISATION

Les décollements tournants peuvent être classés dans deux catégories. En effet, il y a tout d'abord les décollements tournants qui apparaissent lors de l'allumage ou du rallumage de la turbomachine. Ces décollements tournants apparaissent à cause de mauvaises conditions d'allumage, comme par exemple lorsqu'il y a un fort vent de travers, ou dans des situations de thermique défavorables, comme par exemple lorsque la turbomachine est chaude tandis que l'air ambiant est froid. Les conditions externes qui conduisent à favoriser ces allumages avec décollements tournants ne sont pas connues de manière explicite. Toutefois, le procédé décrit dans le document FR n°1055559 peut permettre de détecter ce type de décollement tournant.

Le deuxième type de décollement tournant correspond aux décollements tournants qui apparaissent suite à un pompage. Un pompage est la conséquence d'un décrochage massif de l'écoulement autour des aubages du compresseur. Le pompage peut disparaître de lui-même en cas de raccrochage de l'écoulement autour des aubes du compresseur et ne plus réapparaitre. C'est le cas par exemple suite à une ingestion d'objet extérieur. Le pompage peut également se transformer en décollement tournant si une partie des aubages restent en décrochage. L'apparition de ces décollements tournants est donc directement lié au phénomène de pompage et donc à la marge au pompage du compresseur. Ce type de décollement tournant peut également être détecté par le procédé décrit dans le document FR n°1055559.

Le procédé de suppression du décollement tournant selon l'invention permet de supprimer ces deux types de décollement tournant.

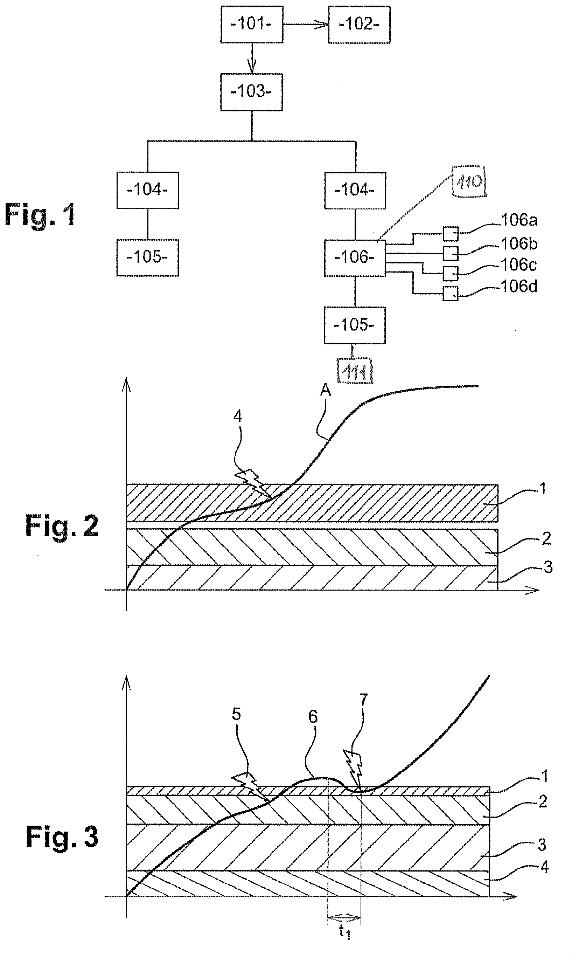

La figure 1 représente les étapes de ce procédé qui est mis en œuvre dans une turbomachine qui comporte un compresseur basse pression relié à une turbine basse pression par l'intermédiaire d'un arbre basse pression, un compresseur haute pression relié à une turbine haute pression par l'intermédiaire d'un arbre haute pression, et une chambre de combustion.

La chambre de combustion est alimentée en carburant par un robinet carburant.

La turbomachine est reliée à un régulateur numérique de moteur à pleine autorité, également appelé FADEC pour « Full Authority Digital Engine Control ». Le FADEC permet notamment de commander le démarrage automatique de la turbomachine. Pour cela, le FADEC peut notamment ouvrir un organe de coupure du débit carburant, qui est de préférence un robinet carburant. Le FADEC peut également commander un organe de régulation du débit carburant qui permet de régler le débit carburant qui alimente la chambre de combustion. Cet organe de régulation du débit carburant est de préférence une vanne carburant.

Le FADEC peut également commander l'arrêt de la chambre de combustion en fermant l'organe de coupure du débit carburant.

En référence à la figure 1, le procédé selon l'invention comporte tout d'abord une étape 101 de détection du décollement tournant. Pour cela, le procédé décrit dans le document FR n°1055559 peut être utilisé.

Si aucun décollement tournant n'est détecté, le procédé est terminé (étape 102).

Si un décollement tournant est détecté, le procédé comporte ensuite une étape 103 de détermination du type de décollement tournant qui a lieu.

Si un décollement tournant du premier type est détecté, c'est-à-dire un décollement tournant qui n'est pas dû à du pompage, le procédé comporte une étape 104 d'extinction de la turbomachine, puis une étape 105 de rallumage de la turbomachine. L'étape 104 d'extinction de la turbomachine est de préférence une étape d'actionnement de l'organe de coupure du débit carburant dans la chambre de combustion de façon à couper le débit de carburant qui arrive dans la chambre de combustion. L'étape 105 de rallumage de la turbomachine est de préférence une étape de rallumage automatique de la turbomachine grâce au FADEC. Pour cela, le FADEC ré-ouvre notamment l'organe de coupure du débit carburant. La durée de la coupure est de préférence de l'ordre de la seconde ou de la seconde et demi. En effet, une telle durée permet dans la majorité des cas de supprimer le décollement tournant.

La figure 2 représente la courbe A d'évolution de la vitesse de rotation du corps haute pression, c'est-à-dire du rotor du compresseur haute pression, du rotor de la turbine haute pression et de l'arbre haute pression, en fonction du temps lors d'un allumage normal. Lorsque la courbe A se trouve dans la zone 1, l'allumage est possible sans décollement tournant. Lorsque la courbe A se trouve dans la zone 2, l'allumage est possible mais il y a du décollement tournant. Lorsque la courbe A se trouve dans la zone 3, l'allumage de la turbomachine est impossible. Dans le cas représenté sur la courbe A, on allume la turbomachine lorsque la courbe A rencontre le point 4. Ce point 4 est dans la zone 1, de sorte que l'allumage a lieu sans aucun problème.

La figure 3 représente la courbe B d'évolution de la vitesse de rotation du corps haute pression en fonction du temps lors d'un allumage. Lorsque la courbe B se trouve dans la zone 1, l'allumage est possible sans décollement tournant. Lorsque la courbe B se trouve dans la zone 2, l'allumage est possible mais il y a du décollement tournant. Dans le cas de la figure 3, la zone dans laquelle il y a un décollement tournant est plus étendue, par exemple parce qu'il y a un vent arrière autour de la turbomachine. Lorsque la courbe B se trouve dans la zone 3, l'allumage de la turbomachine est impossible. Dans le cas représenté sur la courbe B, on allume la turbomachine lorsque la courbe B rencontre le point 5.

Ce point 5 se trouve dans la zone 2 dans laquelle il y a allumage avec décollement tournant. Au point 6, le décollement tournant est détecté, de sorte que la turbomachine est éteinte. La turbomachine est éteinte pendant une durée t1 qui est de préférence de l'ordre de 1 seconde. Comme on peut le voir sur la figure 3, une telle durée t1 est suffisante pour que la vitesse de rotation du corps haute pression diminue de façon à ce que la courbe B revienne dans la zone de démarrage sans décollement tournant. La turbomachine est alors rallumée et dans la plupart des cas, le décollement tournant a disparu.

Si un décollement tournant du deuxième type est détecté, c'est-à-dire un décollement tournant qui est lié à du pompage, le procédé comporte également une étape 104 d'extinction de la turbomachine. Comme dans le cas précédent, l'étape 104 d'extinction de la turbomachine est de préférence une étape d'actionnement de l'organe de coupure du débit carburant dans la chambre de combustion de façon à couper le débit de carburant qui arrive dans la chambre de combustion. Le procédé comporte ensuite une étape 106 de restitution de la marge au pompage du compresseur. En effet, le fait d'arrêter la turbomachine permet de faire disparaître le décollement tournant. Suite à cette coupure un rallumage de la turbomachine est commandé. Ce rallumage automatique est donc lancé rapidement suite à la coupure de carburant. Ce rallumage conduit la turbomachine à se rallumer à un niveau de régime plus élevé que lors de l'allumage initial. Il en résulte dans de nombreux cas un rallumage sein. Par contre, même si le décollement tournant disparaît provisoirement, comme le décollement tournant était dû à du pompage, si on ne fait pas disparaître les conditions d'apparition du pompage, le décollement tournant va réapparaître en cas de nouveau pompage. On restitue donc au compresseur de la marge au pompage de manière à ce qu'il ne pompe pas de nouveau et de manière à ce qu'on ne retourne pas en décollement tournant. Pour éviter que le décollement tournant ne réapparaisse, le procédé comporte donc une étape d'augmentation de la marge au pompage de la turbomachine, qui permet de supprimer le pompage dans la turbomachine.

Dans un mode de réalisation, pour éviter que le pompage ne réapparaisse, l'étape 106 de restitution d'une marge au pompage comporte une étape 110 de mémorisation du paramètre « CsurP » auquel a eu lieu le pompage, ainsi qu'une loi de contrôle du débit carburant issue d'une loi sur « CsurP ». Cette loi est fonction du régime réduit « Xn25r ». Le procédé comporte en outre une étape 111 de diminution de « CsurP », en appliquant un coefficient réducteur sur cette loi autour du niveau de « Xn25r » mémorisé lors du pompage, comme expliqué précédemment. L'étape 111 est avantageusement réalisée suite à l'étape 105 de rallumage de la turbomachine.

La diminution de « CsurP » se traduit alors par une baisse de débit de carburant injecté dans la chambre de combustion, optimisée autour du point de régime réduit critique vis-à-vis du pompage. Ceci permet d'éviter que le pompage ne réapparaisse et ainsi que le décollement tournant ne se reproduise. L'étape de contrôle du débit carburant peut être réalisée en contrôlant une vanne carburant permettant de contrôler la quantité de carburant injectée dans la chambre de combustion.

Par ailleurs l'application localisée de la diminution de « CsurP » permet d'éviter des stagnations ou des extinctions de la turbomachine pour des régimes non critiques vis-à-vis du pompage.

Selon un mode de réalisation, l'étape de diminution de « CsurP » est réalisée de manière itérative, au cas où le pompage réapparaitrait. En effet une baisse trop importante de « CsurP » peut provoquer une stagnation voir une extinction de la turbomachine : la turbomachine risque de stagner et de ne plus pouvoir accélérer ou encore de ne pas se rallumer. C'est pourquoi il est important de procéder par des diminutions itératives : on applique dans un premier temps un premier coefficient réducteur sur la loi de « CsurP » (0.95 par exemple, ce qui correspond à une baisse de 5% de « CsurP »). Puis on rallume le moteur et on laisse le démarrage progresser. En cas de réapparition de décollement tournant suite à un pompage, on applique un deuxième coefficient réducteur (0.9 par exemple, ce qui correspond à une baisse de 10% de « CsurP ») puis on tente de nouveau le démarrage suite à la microcoupure, et ainsi de suite jusqu'à un seuil maximal de baisse de « CsurP ». Une fois ce seuil atteint on considère le démarrage impossible et on envoie une alarme au pilote.

Selon un autre mode de réalisation, si la turbomachine est pilotée en boucle fermée par des réseaux correcteurs en « dXn25/dt », appelés aussi boucles de contrôle du taux d'enroulement de la turbomachine, qui sont fonctions du paramètre « Xn25r », on applique alors le coefficient de réduction sur la consigne de « dXn25/dt ». En effet le taux d'enroulement dXn25/dt est lui aussi un paramètre représentatif de la marge au pompage du compresseur. En limitant le taux d'enroulement du moteur, on diminue naturellement le paramètre « CsurP » à un régime réduit « Xn25r » donné.

Les étapes 110 et 111 de mémorisation et de diminution de CsurP permettent d'augmenter la marge au pompage de la turbomachine, ce qui supprime le pompage dans la turbomachine tout en limitant les risques de stagnation ou d'extinction de la turbomachine.

Afin de restituer de la marge au pompage au compresseur, le procédé peut comporter une ou plusieurs des étapes suivantes :

- Le procédé peut tout d'abord comporter une étape 106a de diminution du débit de carburant dans la chambre de combustion. Pour cela, le FADEC contrôle de préférence l'organe de régulation du débit carburant de façon à diminuer le débit carburant dans la chambre de combustion ; l'organe de régulation du débit carburant peut également être contrôlé par d'autres moyens de commande que le FADEC ;

- Le procédé peut également comporter une étape 106b de modification de l'angle de calage du stator du compresseur haute pression. Pour cela, le compresseur haute pression doit comporter un stator qui présente des aubes dont l'angle de calage est variable. Le fait de modifier l'angle de calage des aubes du compresseur haute pression permet de diminuer la charge sur le compresseur haute pression et donc d'augmenter la marge au pompage de la turbomachine ; l'angle de calage du stator peut être modifié par le FADEC ou par d'autres moyens de commande. Dans un mode de réalisation, l'étape de modification 106b de l'angle de calage est réalisée de manière itérative au cas où le pompage réapparaitrait. Avantageusement, l'étape 106b de modification de l'angle de calage stator est effectuée par modifications successives de l'ordre de 1% à 2% de fermeture de l'angle de calage nominal.

- Le procédé peut également comporter une étape 106c de diminution de la quantité d'air dans le compresseur haute pression, ce qui permet de diminuer la charge sur le compresseur haute pression et donc d'augmenter la marge au pompage. Pour cela, le compresseur haute pression est de préférence pourvu d'une vanne de décharge permettant de contrôler la quantité d'air dans le compresseur haute pression. L'étape 106c de restitution de la marge au pompage comporte alors une étape d'ouverture de la vanne de décharge.

Naturellement, l'invention n'est pas limitée aux modes de réalisations décrits en référence aux figures et des variantes peuvent être envisagées sans sortir du cadre de l'invention. Ainsi, le procédé peut être mis en œuvre par d'autres organes de commande que le FADEC.

## Revendications

1. Procédé de suppression d'un décollement tournant dans un compresseur d'une turbomachine, comportant les étapes suivantes :

   - Une étape (101) de détection automatique d'un décollement tournant dans la turbomachine ;
   - Une étape (103) d'identification du type de décollement tournant détecté :
   - Une étape (104) d'extinction automatique de la turbomachine ;
   - En réponse à l'identification du décollement tournant comme étant du type décollement tournant lié au pompage, une étape (106) de restitution automatique d'une marge au pompage du compresseur;
   - Une étape (105) de rallumage automatique de la turbomachine.

**2.** Procédé selon la revendication précédente, dans lequel la turbomachine comporte une chambre de combustion, la chambre de combustion étant alimentée en carburant, l'étape d'extinction (104) de la turbomachine comportant une étape de coupure de l'alimentation de la chambre de combustion en carburant.

**3.** Procédé selon la revendication précédente, dans lequel un robinet carburant permet d'alimenter la chambre de combustion en carburant, l'étape de coupure de l'alimentation de la chambre de combustion étant une étape de fermeture du robinet carburant.

**4.** Procédé selon l'une des revendications précédentes, dans lequel le type de décollement tournant identifié est du type lié au pompage ou du type non lié au pompage.

**5.** Procédé selon l'une des revendications précédentes, dans lequel l'étape (106) de restitution d'une marge au pompage comporte une étape (110) de mémorisation d'un paramètre représentatif de la marge du pompage.

**6.** Procédé selon la revendication précédente, comportant une étape (111) de diminution du paramètre.

**7.** Procédé selon l'une des revendications précédentes, dans lequel l'étape (106) de restitution de la marge au pompage comporte une étape (106a) de diminution du débit de carburant dans la chambre de combustion.

**8.** Procédé selon l'une des revendications précédentes, le compresseur comportant au moins un stator présentant un angle de calage variable, l'étape (106) de restitution de la marge au pompage comportant une étape (106b) de modification de l'angle de calage du stator.

**9.** Procédé selon l'une des revendications précédentes, le compresseur étant pourvu d'une vanne de décharge permettant de contrôler la quantité d'air dans le compresseur, l'étape (106c) de restitution de la marge au pompage comportant une étape d'ouverture de la vanne de décharge.

**Patentansprüche**

**1.** Unterdrückungsverfahren einer Ablösung, die sich in einem Kompressor einer Turbomaschine dreht, umfassend die folgenden Schritte:

- einen automatischen Detektionsschritt (101) einer Ablösung, die sich in der Turbomaschine dreht;
- einen Identifizierungsschritt (103) des Typs der detektierten Ablösung;
- einen automatischen Löschschritt (104) der Turbomaschine;
- in Beantwortung auf die sich drehende Ablösung als der mit dem Pumpen verbundene, sich drehende Ablösungstyp einen automatischen Wiedergabeschritt (106) einer Marge beim Pumpen des Kompressors;
- einen automatischen Wiederentzündungsschritt (105) der Turbomaschine.

**2.** Verfahren gemäß dem voranstehenden Anspruch, bei dem die Turbomaschine eine Verbrennungskammer umfasst, wobei die Verbrennungskammer mit Treibstoff versorgt wird, wobei der Löschschritt (104) der Turbomaschine einen Abschaltschritt der Versorgung der Verbrennungskammer mit Treibstoff umfasst.

**3.** Verfahren gemäß dem voranstehenden Anspruch, bei dem ein Treibstoffhahn das Versorgen der Verbrennungskammer mit Treibstoff ermöglicht, wobei der Abschaltschritt der Versorgung der Verbrennungskammer ein Schließungsschritt des Treibstoffhahns ist.

**4.** Verfahren gemäß einem der voranstehenden Ansprüche, bei dem der Typ der identifizierten, sich drehenden Ablösung von dem mit dem Pumpen verbundenen Typ oder dem nicht mit dem Pumpen verbundenen Typ ist.

**5.** Verfahren gemäß einem der voranstehenden Ansprüche, bei dem der Wiedergabeschritt (106) einer Marge beim Pumpen einen Speicherschritt (110) eines die Marge des Pumpens darstellenden Parameter umfasst.

**6.** Verfahren gemäß dem voranstehenden Anspruch, umfassend einen Verringerungsschritt (111) des Parameters.

**7.** Verfahren gemäß einem der voranstehenden Ansprüche, bei dem der Wiedergabeschritt (106) der Marge beim Pumpen einen Verringerungsschritt (106a) des Treibstoffdurchsatzes in der Verbrennungskammer umfasst.

**8.** Verfahren gemäß einem der voranstehenden Ansprüche, wobei der Kompressor wenigstens einen Stator umfasst, der einen variablen Verkeilungswinkel aufweist, wobei der Wiedergabeschritt (106) der Marge beim Pumpen einen Veränderungsschritt (106b) des Verkeilungswinkels des Stators umfasst.

**9.** Verfahren gemäß einem der voranstehenden Ansprüche, wobei der Kompressor mit einem Ablassventil versehen ist, das das Kontrollieren der Luftmenge in dem Kompressor zulässt, wobei der Wiedergabeschritt (106c) der Marge beim Pumpen einen Öffnungsschritt des Ablassventils umfasst.

## Claims

**1.** Method for eliminating rotational stall in a compressor of a turbine engine, comprising the following steps:

   - A step (101) for automatic detection of a rotational stall;
   - A step (103) for automatic identification of the type of rotational stall detected;
   - A step (104) for automatic shut-down of the turbine engine;
   - In answer to the identification of the rotational stall as being of rotational stall type due to a surge, a step (106) for automatic restoration of a surge margin of the compressor;
   - A step (105) for automatic re-ignition of the turbine engine.

**2.** Method according to the preceding claim, wherein the turbine engine includes a combustion chamber, where the combustion chamber is fed with fuel, where the shut-down step (104) of the turbine engine includes a step for cutting off the fuel supply to the combustion chamber.

**3.** Method according to the preceding claim, wherein a fuel tap allows fuel to be supplied to the combustion chamber, with the step for cutting off the supply to the combustion chamber being a step involving closing the fuel tap.

**4.** Method according to any of the preceding claims, wherein the identified rotational stall type is from a type due to a surge or from a type not due to a surge.

**5.** Method according to one of the preceding claims, wherein the step (106) for restoring surge margin includes a step (110) for storing in memory a parameter which is representative of the surge margin.

**6.** Method according to the preceding claim, wherein it includes a step (111) for lessening the parameter.

**7.** Method according to one of the preceding claims, wherein the step (106) for restoring surge margin includes a step (106a) for reducing the flow rate of fuel into the combustion chamber.

**8.** Method according to one of the preceding claims, where the compressor includes at least one stator with a variable pitch angle, the step (106) for restoration of surge margin including a step (106b) for modifying the pitch angle of the stator.

**9.** Method according to one of the preceding claims, where the compressor is provided with a discharge valve which allows the amount of air in the compressor to be controlled, where the step (106c) for restoration of surge margin includes a step for opening the discharge valve.

Fig. 1

-101- → -102-

-103-

-104-    -104-    [110]

-105-    -106-    106a
                  106b
                  106c
                  106d

-105-

[111]

Fig. 2

4    A

1
2
3

Fig. 3

5    6    7

1
2
3
4

$t_1$

**EP 2 681 429 B1**

**RÉFÉRENCES CITÉES DANS LA DESCRIPTION**

**Documents brevets cités dans la description**

- FR 1055559
- US 3868625 A
- US 4118926 A